# EUROPÄISCHE PATENTSCHRIFT

(11) **EP 2 251 749 B1**
(45) Veröffentlichungstag und Bekanntmachung des Hinweises auf die Patenterteilung: **22.01.2014**
(21) Anmeldenummer: 10162524.2
(22) Anmeldetag: 11.05.2010
(51) Int. Cl.: G04G 15/00, H05B 37/02

(54) **Astronomische Zeitschaltvorrichtung**
Astronomical time switch means
Dispositif de minuterie astronomique

(30) Priorität: 14.05.2009 DE 102009025801
(43) Veröffentlichungstag der Anmeldung: 17.11.2010
(73) Patentinhaber: Legrand GmbH, 59494 Soest (DE)
(72) Erfinder: Tebrake, Gregor, 59494, Soest (DE); Schröer, Carsten, 59505, Bad Sassendorf (DE); Isenberg, Andreas, 58708, Menden (DE)
(74) Vertreter: Reimann, Silke

(56) Entgegenhaltungen:
- WO-A1-02/51012
- US-A- 6 011 755
- US-A1- 2003 025 400
- US-A1- 2008 112 269

## Beschreibung

Die Erfindung betrifft eine Schaltvorrichtung und ein Verfahren zum Schalten einer elektrischen Last, insbesondere Leuchtmittel, in Abhängigkeit von täglich berechneten Zeitpunkten bestimmter Sonnenpositionen, die einen Steuerprozessor mit einen Speicher sowie Eingabemittel und Schaltmittel umfasst.

Es sind verschiedene elektronische Schaltvorrichtungen bekannt, die in Abhängigkeit bestimmter Sonnenpositionen elektrische Lasten, insbesondere Leuchtmittel, einschalten und ausschalten. Solche Schaltvorrichtungen, wie etwa in den Patentschriften EP 0 447 849 B1 und US 4,922,407 beschrieben, verlangen vom Benutzer umfangreiche Eingaben in Form von Uhrzeit, Datum, Längengrad, Breitengrad, Zeitzone, Schaltzeiten. Darüber hinaus ist die Eingabe von Schaltverzögerungszeiten in Bezug auf den berechneten Zeitpunkt des Sonnenaufgangs oder des Sonnenuntergangs zur Anpassung des Schaltverhaltens an ein Dämmerungsniveau üblich. Wegen der Vielzahl der Eingabedaten benötigen derartige Schaltvorrichtungen in der Regel neben den Eingabemitteln eine Anzeige, auf der für den Anwender Eingabedaten und Betriebszustände dargestellt werden. Das führt dazu, dass diese Schaltvorrichtungen ein relativ großes Bauvolumen besitzen und teuer sind. Die Anzahl der notwendigen Eingabedaten kann durch Funkempfang von Zeitzeichensendern, beispielsweise dem DCF77, reduziert werden, wie es aus der Schrift DE 3019279 bekannt ist, was jedoch einen beträchtlichen Aufwand hinsichtlich der Funkempfangseinrichtung bedeutet, sowie Einschränkungen bezüglich des weltweiten Einsatzes.
Aus DE 102004042200 ist weiterhin eine astronomische Schaltuhr mit automatischer Parametrierung bekannt, die neben der Zeit und Datumsinformation auch ihre aktuellen geographischen Koordinaten aus Satellitensignalen ermittelt. Der Aufwand für den Empfang und die Decodierung des Satellitensignals ist auch in diesem Fall erheblich.

In der Patentschrift US 6,011,755 ist eine Schaltvorrichtung beschrieben, die in Abhängigkeit von täglich berechneten Zeitpunkten bestimmter Sonnenpositionen eine Last schaltet und die einen Steuerprozessor mit einen Speicher sowie Eingabemittel und Schaltmittel umfasst. Die Zeit wird hier als lokale Zeit über die Eingabemittel eingegeben und dann auch auf einer Anzeige angezeigt. Die Berechnung der Schaltzeitpunkte wird in Abhängigkeit von den Sonnenpositionen auf Basis der lokalen Zeit vorgenommen. Durch die Ausstattung der Schaltvorrichtung mit einer Anzeige und Eingabemitteln für die lokale Zeit (Zeitzonenzeit) und weitere Funktionen ist sie aufwendig herzustellen.

Es ist Aufgabe der Erfindung eine Schaltvorrichtung anzugeben, die ein möglichst kleines Bauvolumen besitzt, die preiswert herstellbar ist, wenige Eingabedaten benötigt, und weltweit einsetzbar ist, oder zumindest in relativ ausgedehnten Regionen wie Europa einsetzbar ist.

Diese Aufgabe wird durch eine Vorrichtung mit den Merkmalen des Anspruchs 1 sowie ein Verfahren gemäß Anspruch 9 gelöst.
Ausführungsformen der Erfindung sind in den Unteransprüchen beschrieben.

Die Schaltvorrichtung zeichnet sich dadurch aus, dass die interne Uhrzeit nur einmal bei der Herstellung als koordinierte Weltzeit (UTC) mit dem zugehörigen aktuellen Datum in die Uhr eingegeben wird. Dies kann auch die Universal Time 1 (UT1) sein, da sie sich nie mehr als 1 Sekunde von der UTC unterscheidet. Bei der Installation der Schaltvorrichtung muss nun nicht mehr auf die lokale Zeit umgestellt werden. Nach der Synchronisation mit UTC wird die interne Uhr aus einer Pufferbatterie gespeist, solange keine externe Versorgungsspannung verfügbar ist. Die Pufferbatterie ist vorzugsweise für eine fünf-jährige Betriebsdauer ausgelegt, und wird im Netzbetrieb nicht entladen. Die Uhrzeit und das Datum werden fortlaufend durch den Steuerprozessor und einen angelegten Zeittakt inkrementiert.
Bei der Inbetriebnahme der Schaltvorrichtung am Einsatzort sind lediglich die geographischen Koordinaten in Form von Längengrad und Breitengrad einzugeben und gegebenenfalls ist ein spezifisches Schaltprofil auszuwählen.
Die Eingabe von Längengrad und Breitengrad erfolgt vorzugsweise gerundet in Form ganzer Zahlen, was hinsichtlich der Genauigkeit der daraus berechneten Zeitpunkte bestimmter Sonnenpositionen ausreichend ist, und gleichzeitig erhebliche Vorteile bezüglich des Aufwands der Eingabemittel bietet.
Aus der Eingabe der geographischen Koordinaten in Form ganzer Gradzahlen resultiert, dass die berechneten Zeiten bestimmter Sonnenpositionen für Einsatzorte, die zwischen zwei Längengraden oder Breitengraden liegen, Abweichungen aufweisen. Die Abweichungen der zu berechnenden Zeiten für Positionen zwischen zwei Längengraden erreicht genau in der Mitte zwischen zwei Längengraden ein Maximum von +/- 2 Minuten.
Bezogen auf eine Position genau zwischen zwei Breitengraden nimmt die Abweichung der berechneten Zeiten mit der nördlichen oder südlichen Breite zu und beträgt beispielsweise bei einer Breite von 30,5 Grad Nord ca. +/- 1 Minute und bei einer Breite von 60,5 Grad Nord ca. +/-7 Minuten.
Anhand der Koordinaten, der internen auf UTC basierenden Uhrzeit und des aktuellen Datums berechnet der Steuerprozessor laufend mittels bekannter astronomischer Algorithmen die Zeitpunkte bestimmter Sonnenpositionen in MOZ.
In Abhängigkeit von den berechneten Zeitpunkten bestimmter Sonnenpositionen bewirkt der Steuerprozessor die Einschaltung oder Ausschaltung der elektrischen Last durch die Schaltmittel..

Es sind verschiedene wählbare Schaltprofile vorgesehen, die eine Optimierung für verschiedene Einsatzfälle ermöglichen, beispielsweise im Hinblick auf die Steuerung einer Beleuchtungsanlage in Abhängigkeit der natürlichen Helligkeit und der Mittleren Ortszeit (MOZ), oder bezüglich des Energieverbrauchs einer solchen Beleuchtungsanlage. Dazu werden Sonnenaufgang und Sonnenuntergang und auch zusätzliche Ein-, oder Ausschaltvorgänge zu festgelegten Zeitpunkten genutzt.

So kann in einem ersten Schaltprofil abends bei Sonnenuntergang eingeschaltet und morgens bei Sonnenaufgang ausgeschaltet werden.
In einem zweiten Schaltprofil wird abends bei Sonnenuntergang eingeschaltet und um 22:30 Uhr MOZ ausgeschaltet, morgens wird um 04:30 MOZ eingeschaltet und bei Sonnenaufgang ausgeschaltet.
Als weitere Schaltprofile sind vorgesehen:
3: Einschalten bei Sonnenuntergang, Ausschalten um 22:30 Uhr MOZ
4: Einschalten am Ende der zivilen Dämmerung nach Sonnenuntergang, ausschalten am Anfang der zivilen Dämmerung vor Sonnenaufgang
5: Einschalten am Ende der zivilen Dämmerung nach Sonnenuntergang, Ausschalten um 22:30 Uhr MOZ, Einschalten um 04:30 Uhr MOZ, Ausschalten am Anfang der zivilen Dämmerung vor Sonnenaufgang
6: Einschalten am Ende der zivilen Dämmerung nach Sonnenuntergang, Ausschalten um 22:30 Uhr MOZ
Dabei ist der Anfang bzw. das Ende der zivilen Dämmerung als eine Position des Sonnenmittelpunktes von 6° unterhalb des Horizontes definiert.

Als Eingabemittel für Längengrad und Breitengrad sind Drehpotentiometer oder Drehschalter mit jeweils zehn Raststellungen vorgesehen, wobei die Raststellungen jeweils die Dezimalwerte null, eins, ... neun darstellen. Jeweils ein Drehpotentiometer oder Drehschalter wird für die Einer-, Zehner- und Hunderterstelle verwendet. Drehpotentiometer mit zehn Raststellungen haben im Vergleich zu Drehschaltern mit zehn Raststellungen den Vorteil, dass die Anzahl der Leitungen zum Steuerprozessor erheblich geringer ist.
Die Auslesung der Raststellungen der Drehpotentiometer, also die Analog-Digital-Wandlung der jeweiligen Widerstandswerte in die zugeordneten Dezimalwerte erfolgt, indem der Widerstandswert jedes Drehpotentiometers zeitlich sequentiell in eine proportionale Zeit gewandelt wird.
Dazu ist jedes Drehpotentiometer einseitig mit einem Prozessorport verbunden, und die jeweils andere Seite aller Drehpotentiometer untereinander ist mit einem ersten Anschluss eines Kondensators verbunden, dessen zweiter Anschluss mit dem gemeinsamen Bezugspotential verbunden ist.
Der gemeinsame Verbindungspunkt zwischen den Drehpotentiometern und dem Kondensator ist an einen weiteren Prozessorport geführt.
In jeder Sequenz wird zunächst der Kondensator entladen, und anschließend wird die charakteristische Zeit des Anstiegs der Spannung am Kondensator bis zu einem Referenzwert gemessen, indem der Kondensator vom Prozessorport über den der Raststellung entsprechenden Widerstand des auszulesenden Drehpotentiometers geladen wird. Die Messwerte der Anstiegszeit verhalten sich direkt proportional zum eingestellten Widerstand des Drehpotentiometers. Messwerte der Anstiegszeit, die innerhalb eines definierten Toleranzfensters liegen, werden vom Prozessor als einer von zehn möglichen Dezimalwerten interpretiert, welcher der aktuellen Raststellung des Drehpotentiometers entspricht.

Für die Eingabe des Zahlenwertes des Längengrads (Null bis einhundertachtzig Grad) für beliebige Orte der Erdoberfläche sind demzufolge drei Eingabemittel vorzusehen. Die Eingabe des Zahlenwertes des Breitengrads (Null bis neunzig Grad) für beliebige Orte der Erdoberfläche lässt sich mit zwei Eingabemitteln realisieren.
Insgesamt werden für die Eingabe der reinen Zahlenwerte des Längen- und Breitengrads in den Steuerprozessor 6 Prozessorports benötigt, fünf Leitungsverbindungen zu den Drehpotentiometern und eine gemeinsame Rückleitung. Die Festlegung, ob die an den Eingabemitteln eingestellten Werte als nördliche oder südliche Breite, bzw. als östliche oder westliche Länge interpretiert werden sollen, erfolgt über zusätzliche Zwei-Stellungsschalter, wobei jeweils ein Zwei-Stellungsschalter mit den Schaltstellungen West und Ost den Eingabemitteln für die Längeneingabe zugeordnet ist, und ein Zwei-Stellungsschalter mit den Schaltstellungen Nord und Süd den Eingabemitteln für die Breiteneingabe zugeordnet ist.
Da die Eingabemittel für die Einstellung der geographischen Koordinaten in Form von Längengrad und Breitengrad bei einem fest installierten Gerät in der Regel nur einmal bei der Installation am Einsatzort benutzt werden, werden diese vorzugsweise auf einer oder beiden Seitenflächen eines typischen Verteilereinbaugehäuses angeordnet. Diese Anordnung bietet einerseits ausreichend Platz, um mittels aufgedruckter Hinweise, sei es in Form von Text oder Symbolen, die Funktion der Eingabemittel für den Anwender zu erläutern, andererseits sind die Eingabemittel für die geographische Ortsangabe nach der ordnungsgemäßen Installation nicht mehr zugänglich, wodurch ein unbefugtes oder unbeabsichtigtes Verstellen wirkungsvoll verhindert wird.

Das Zeittaktsignal der internen Uhr der Schaltvorrichtung wird von einem internen Oszillator abgeleitet.
Bei dem Oszillator handelt es sich vorzugsweise um einen für Uhrenanwendungen typischen 32 KHz Quarzoszillator. Bereits während der Herstellung der elektronischen Schaltvorrichtung wird die interne Uhr gestartet, und es werden über eine interne Schnittstelle einmalig die koordinierte Weltzeit (Coordinated Universal Time, UTC) und das aktuelle Datum eingestellt. Bei jedem Mitternachtsübergang der Uhrzeit wird danach auch das intern gespeicherte Datum um einen Tag inkrementiert.
Um nach der einmaligen Synchronisation mit UTC die Abweichungen der internen Uhrzeit bezogen auf UTC infolge der temperaturabhängigen Frequenzabweichung des internen Oszillators, der die Uhr fortan steuert, zu minimieren, wird die unmittelbare Umgebungstemperatur des Quarzoszillators mittels eines Temperatursensors, vorzugsweise eines temperaturabhängigen Widerstands, in periodischen Intervallen gemessen.
Die Temperaturmessung erfolgt über eine Analog-Digital-Wandlung, indem ein zuvor entladener Kondensator über einen temperaturabhängigen Widerstand in periodischen Intervallen geladen wird, und die Anstiegszeit der Spannung bis zu einem Referenzwert der Spannung am Kondensator gemessen wird.
Aus der gemessenen Zeit lässt sich über einen Umrechnungsfaktor die aktuelle Temperatur berechnen.
Eine Korrektur der internen Uhrzeit auf Basis der bekannten temperaturabhängigen Frequenzabweichung des 32 KHz Quarzes wird berechnet. Die Korrektur wird bewirkt, indem die interne Uhrzeit um eine Zeiteinheit vorgestellt wird, sobald die berechnete kumulierte Abweichung minus eine Zeiteinheit beträgt und indem die interne Uhr für die Dauer einer Zeiteinheit angehalten wird, sobald die berechnete kumulierte Abweichung plus eine Zeiteinheit beträgt. Die Zeiteinheit ist vorzugsweise eine Sekunde oder eine Minute.

Weitere Merkmale der Erfindung werden anhand der Figuren beispielhaft erläutert.
Fig. 1 zeigt die Schaltvorrichtung mit den Bedienelementen und ihren Anschlüssen.
Fig. 2 zeigt eine reduzierte Ausführungsform der Schaltvorrichtung.
Fig. 3 zeigt verschiedene Schaltprofile und deren Abhängigkeit vom Sonnenstand.
Fig. 4 zeigt ein Blockschaltbild der Einstellelemente.

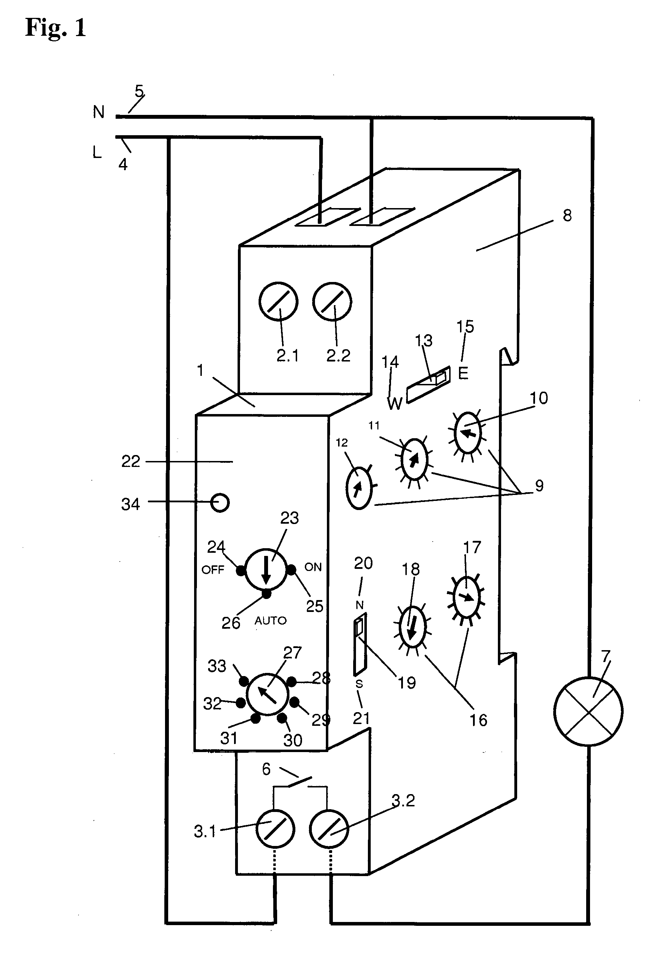

In Fig.1 ist eine Schaltvorrichtung in einem 1-Modul Verteilereinbaugehäuse 1 dargestellt, welches über die Anschlussklemmen 2.1, 2.2 und 3.1, 3.2 mit einem elektrischen Leitungsnetz verbunden ist. Die Anschlussklemmen 2.1, 2.2 dienen der Stromversorgung, wobei Klemme 2.1 mit dem Phasenleiter 4 und Klemme 2.2 mit dem Nullleiter 5 der Netzspannung verbunden ist. Der Phasenleiter 4 ist zusätzlich mit einer ersten Anschlussklemme 3.1 des potentialfreien Schaltmittels 6 verbunden, wobei die zweite Anschlussklemme 3.2 des Schaltmittels 6 elektrisch mit einer ersten Seite einer Last 7 verbunden ist, dessen zweite Seite wiederum mit dem Nullleiter 5 des Versorgungsnetzes verbunden ist.
Auf der Seitenfläche 8 des Gehäuses 1 sind in einer ersten Gruppe 9 Eingabemittel in Form von Drehpotentiometern für die Eingabe von Längengraden angeordnet, wobei je ein Drehpotentiometer 10, 11 mit zehn unterschiedlichen Raststellungen für die Einstellung der Einer-Stelle 10 und der Zehnerstelle 11 vorgesehen ist, sowie ein Drehpotentiometer 12 mit zwei Raststellungen für die Eingabe der Hunderter-Stelle. Die Festlegung, ob es sich um einen westlichen oder östlichen Längengrad handelt wird mittels eines zur Gruppe 9 zugehörigen Zwei-Stellungsschalter 13 getroffen, dessen einer Schaltstellung 14 die Festlegung auf die westliche Länge, und dessen zweiter Schaltstellung 15 die Festlegung auf die östliche Länge in Bezug auf den Nullmeridian zugeordnet ist.
Auf der Seitenfläche 8 des Gehäuses sind in einer zweiten Gruppe 16 Eingabemittel in Form von Drehpotentiometern für die Eingabe von Breitengraden angeordnet, wobei je ein Drehpotentiometer 17, 18 mit zehn unterschiedlichen Raststellungen für die Einstellung der Einer-Stelle 17 und der Zehnerstelle 18 vorgesehen ist. Die Festlegung, ob es sich um einen nördlichen oder südlichen Breitengrad handelt wird mittels eines zur Gruppe 16 zugehörigen Zwei-Stellungsschalter 19 getroffen, dessen einer Schaltstellung 20 die Festlegung auf die nördliche Breite, und dessen zweiter Schaltstellung 21 die Festlegung auf die südliche Breite in Bezug auf den Erd-Äquator zugeordnet ist.
Auf der Frontfläche 22 des Gerätes ist in diesem Ausführungsbeispiel ein weiteres Eingabemittel 23 in Form eines Drehschalters oder Drehpotentiometer mit drei Raststellungen angeordnet, das in der jeweiligen Raststellung der Auswahl unterschiedlicher Betriebsarten, beispielsweise Dauerausschaltung 24, Dauereinschaltung 25 und Automatikbetrieb 26 dient.
Ein weiteres Eingabemittel 27 auf der Frontfläche des Gerätes, als Drehschalter oder Drehpotentiometer mit mehreren Raststellungen 28, 29, 30, 31, 32, 33 ausgeführt, dient dazu, dem Anwender die Auswahl eines von mehreren verschiedenen zeitlichen Schaltprofilen zu erlauben. Beispiele für die Zuordnung der Schaltprofile zu den Raststellungen sind folgende:
- Raststellung 28:: Einschalten bei Sonnenuntergang, Ausschalten bei Sonnenaufgang.
- Raststellung 29:: Einschalten bei Sonnenuntergang, Ausschalten um 22:30 Uhr MOZ, Einschalten um 04:30 Uhr MOZ, ausschalten bei Sonnenaufgang.
- Raststellung 30:: Einschalten bei Sonnenuntergang, Ausschalten um 22:30 Uhr MOZ.
- Raststellung 31:: Einschalten am Ende der zivilen Dämmerung nach Sonnenuntergang, Ausschalten am Anfang der zivilen Dämmerung vor Sonnenaufgang
- Raststellung 32:: Einschalten am Ende der zivilen Dämmerung nach Sonnenuntergang, Ausschalten um 22:30 Uhr MOZ, Einschalten um 04:30 Uhr MOZ, Ausschalten am Anfang der zivilen Dämmerung vor Sonnenaufgang
- Raststellung 33:: Einschalten am Ende der zivilen Dämmerung nach Sonnenuntergang, Ausschalten um 22:30 Uhr MOZ

Als Anzeige, welche beispielsweise den Schaltzustand des Schaltmittels 6 signalisiert ist auf der Frontfläche 22 eine LED 34 angeordnet, welches leuchtet oder seine Farbe wechselt, sobald das Schaltmittel eingeschaltet wird.

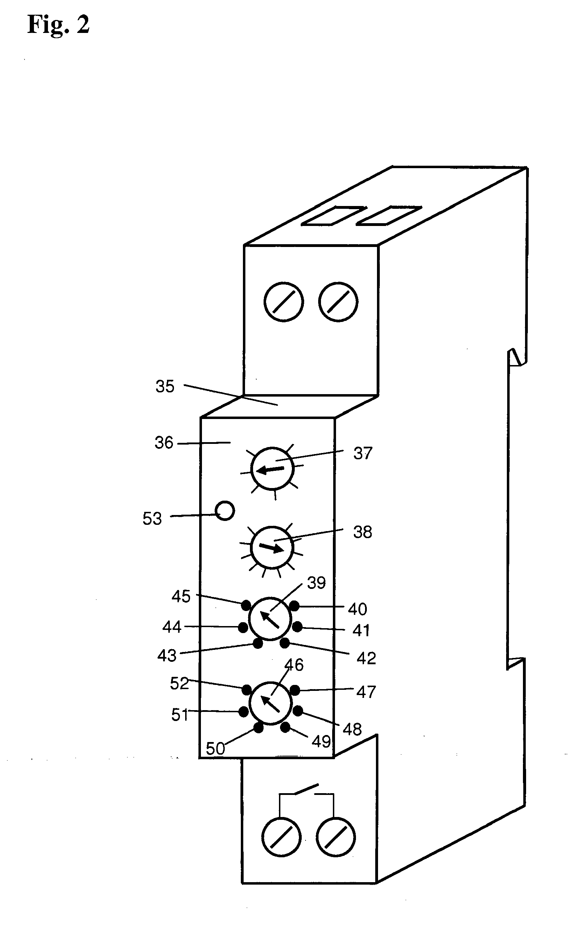

Fig. 2 zeigt eine Schaltvorrichtung in einem 1-Modul Verteilereinbaugehäuse 1, dessen Versorgungseingänge und Schaltausgänge in gleicher Weise wie das in Fig.1 dargestellte Gerät angeschlossen sein sollen. Hinsichtlich der Eingabemittel ist dieses Ausführungsbeispiel deutlich reduziert. Die dargestellte reduzierte Schaltvorrichtung 35 ist beispielsweise für einen Einsatz in der Region Europa vorgesehen, und besitzt lediglich auf der Frontfläche 36 vier Eingabemittel in Form von Drehpotentiometern, wobei das erste Eingabemittel 37 sieben Raststellungen aufweist, welche die Dezimalzahlen 0, 1, ... 6 verkörpern und das zweite Eingabemittel 38 zehn Raststellungen aufweist, welche die Dezimalzahlen 0, 1, ...9 darstellen.
Ein drittes Eingabemittel 39 weist sechs Rastellungen 40, 41, 42, 43, 44, 45 auf.
In Abhängigkeit dieser Raststellungen des dritten Eingabemittels werden bestimmte Eingabesequenzen und Betriebsarten ausgewählt.
Die Verdrehung in die Raststellung 40 des dritten Eingabemittels 39 startet die Eingabesequenz für die Einstellung des westlichen Längengrad, wobei der Steuerprozessor die nachfolgenden Änderungen der eingestellten Rastposition an dem ersten Eingabemittel 37 dezimal als Zehner-Stelle und die Änderung der eingestellten Rastposition am zweiten Eingabemittel 38 dezimal als Einer-Stelle des westlichen Längengrads interpretiert und geänderte Werte in dieser Eingabesequenz speichert. Über die Rastposition 41 des dritten Eingabemittels 39 lässt sich in gleicher Weise die Eingabesequenz mit der Interpretation der Eingabedaten als östlicher Längengrad auslösen.
Über die Rastposition 42 des dritten Eingabemittels 39 lässt sich in gleicher Weise die Eingabesequenz mit der Interpretation der Eingabedaten als nördlicher Breitengrad auslösen.
Die Raststellungen 43, 44, 45 des dritten Eingabemittels dienen der Auswahl einer bestimmten Betriebsart, wobei solange die Raststellung 45 eingestellt ist, ein Ausschalten des Schaltmittels 6 der Schaltvorrichtung bewirkt wird, und solange die Raststellung 44 eingestellt ist ein Einschalten des Schaltmittels 6 bewirkt wird.
Die Verdrehung in die Raststellung 43 des dritten Eingabemittels 39 startet den Automatikbetrieb der Schaltvorrichtung, wobei das Schaltmittel 6 zeitlich nach einem von mehreren wählbaren Schaltprofilen in Abhängigkeit der intern errechneten und/oder fest hinterlegten Schaltzeiten SZ1, SZ2 eingeschaltet und ausgeschaltet wird.
Die Auswahl eines bestimmten Schaltprofils erfolgt durch Verdrehen des vierten Eingabemittels 46 in eine von beispielsweise sechs Raststellungen 47, 48, 49, 50, 51, 52.
Die Raststellung 47 des vierten Eingabemittels 46 entspricht dem Einschalten des Schaltmittels bei Sonnenuntergang und dem Ausschalten bei Sonnenaufgang. Eine so gesteuerte Beleuchtungsanlage würde demnach die ganze Nacht eingeschaltet.
Die Raststellung 48 des vierten Eingabemittels 46 entspricht dem Einschalten des Schaltmittels bei Sonnenuntergang, der Abschaltung SZ2 um 22:30Uhr MOZ, der Einschaltung SZ1 um 04:30 Uhr MOZ und dem Ausschalten bei Sonnenaufgang. Eine so gesteuerte Beleuchtungsanlage würde demnach in den Abendstunden nach Sonnenuntergang und in den Morgenstunden vor Sonnenaufgang eingeschaltet. In der aktivitätsarmen Nachtzeit wird jedoch abgeschaltet, um beispielsweise Energie zu sparen.
Die Raststellung 49 des vierten Eingabemittels 46 entspricht dem Einschalten des Schaltmittels bei Sonnenuntergang und der Abschaltung SZ2 um 22:30Uhr MOZ. Eine so gesteuerte Beleuchtungsanlage würde demnach nur in den Abendstunden nach Sonnenuntergang bis 22:30 Uhr MOZ eingeschaltet.

Die Raststellung 50 des vierten Eingabemittels 46 entspricht dem Einschalten des Schaltmittels bei Ende der zivilen Dämmerung nach Sonneuntergang und dem Ausschalten bei Anfang der zivilen Dämmerung vor Sonnenaufgang. Eine so gesteuerte Beleuchtungsanlage würde demnach in den Dämmerungsphasen noch nicht, sondern erst in der tatsächlich dunklen Phase der Nacht eingeschaltet.

Die Raststellung 51 des vierten Eingabemittels 46 entspricht dem Einschalten des Schaltmittels bei Ende der zivilen Dämmerung nach Sonnenuntergang, der Abschaltung SZ2um 22:30Uhr MOZ, der Einschaltung SZ1 um 04:30 Uhr MOZ und dem Ausschalten bei Anfang der zivilen Dämmerung vor Sonnenaufgang. Eine so gesteuerte Beleuchtungsanlage würde demnach in den Abendstunden erst bei Dunkelheit und in den Morgenstunden nur in der Dunkelphase eingeschaltet. In der aktivitätsarmen Nachtzeit wird jedoch abgeschaltet, um beispielsweise Energie zu sparen.
Die Raststellung 52 des vierten Eingabemittels 46 entspricht dem Einschalten des Schaltmittels bei Ende der zivilen Dämmerung nach Sonnenuntergang und der Abschaltung SZ2 um 22:30Uhr MOZ. Eine so gesteuerte Beleuchtungsanlage würde demnach nur in der Dunkelphase nach Sonnenuntergang bis 22:30 Uhr MOZ eingeschaltet.

Die optische Anzeige 53 in Form des LED auf der Frontfläche 36 signalisiert im Automatikbetrieb den Schaltzustand des Schaltmittels 6) wobei die LED vorzugsweise eingeschaltet ist, wenn auch das Schaltmittel eingeschaltet ist.
In den über das Eingabemittel 39 in den Raststellungen 40, 41, 42 eingeleiteten Eingabesequenzen signalisiert die LED jede Speicherung der an den Eingabemitteln 37 und 38 durchgeführten Änderungen der Raststellungen durch jeweils kurzes Aufleuchten.

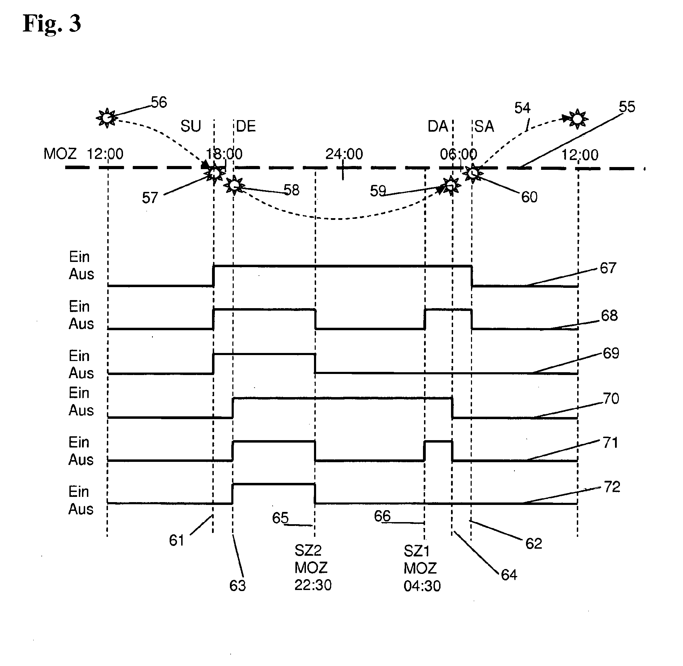

Fig. 3 zeigt in einer Graphik die verschiedenen Schaltprofile.
Im oberen Bereich der Graphik ist schematisch der Tageslauf der Sonne 54 in Bezug auf eine Horizontlinie 55 dargestellt, auf der die Mittlere Ortszeit MOZ einer Tagesdauer von Mittags 12 Uhr bis Mittags 12 Uhr in Abständen von jeweils sechs Stunden skaliert ist.
Im täglichen Sonnenlauf sind die charakteristischen Positionen 56, 57, 58, 59, 60 dargestellt, wobei die Position 56 bis auf den Betrag der Zeitgleichung etwa der Mittagshöhe der Sonne oberhalb des Horizonts entspricht.
Die Position 57 entspricht dem Sonnenuntergang und die Position 60 entspricht dem Sonnenaufgang mit Berücksichtigung der atmosphärischen Refraktion und des Sonnenradius, also einer Position des Sonnenmittelpunkts von 50 Bogenminuten unterhalb des Horizonts.

Die Position 58 entspricht dem Ende der zivilen Dämmerung nach Sonnenuntergang und die Position 59 entspricht dem Anfang der zivilen Dämmerung vor Sonnenaufgang, also einer Position des Sonnenmittelpunkts von 6 Winkelgrad unterhalb des Horizonts. Die rechtwinklig zur Horizontlinie verlaufenden gestrichelten Linien markieren die Zeitpunkte des Sonnenuntergangs 61, des Sonnenaufgangs 62, des Endes der zivilen Dämmerung nach Sonnenuntergang 63, des Anfangs der zivilen Dämmerung vor Sonnenaufgang 64, der festen Schaltzeiten SZ2 um 22:30 MOZ und SZ1um 04:30 MOZ in Bezug auf die MOZ-Skala auf der Horizontlinie.
Unterhalb des täglichen Sonnenlaufs sind verschieden zeitliche Schaltprofile 67, 68, 69, 70, 71, 72 in Diagrammform dargestellt, wobei in jedem Schaltprofil das obere Niveau den Einschaltzustand, und das untere Niveau den Ausschaltzustand verkörpert. Schaltprofil 67 entspricht der Raststellung 47 des Eingabemittels 46 in Fig.2 und der Raststellung 28 des Eingabemittels 27 in Fig.1.
Schaltprofil 68 entspricht der Raststellung 48 des Eingabemittels 46 in Fig.2 und der Raststellung 29 des Eingabemittels 27 in Fig.1.
Schaltprofil 69 entspricht der Raststellung 49 des Eingabemittels 46 in Fig.2 und der Raststellung 30 des Eingabemittels 27 in Fig.1.
Schaltprofil 70 entspricht der Raststellung 50 des Eingabemittels 46 in Fig.2 und der Raststellung 31 des Eingabemittels 27 in Fig.1.
Schaltprofil 71 entspricht der Raststellung 51 des Eingabemittels 46 in Fig.2 und der Raststellung 32 des Eingabemittels 27 in Fig.1.
Schaltprofil 72 entspricht der Raststellung 52 des Eingabemittels 46 in Fig.2 und der Raststellung 33 des Eingabemittels 27 in Fig.1

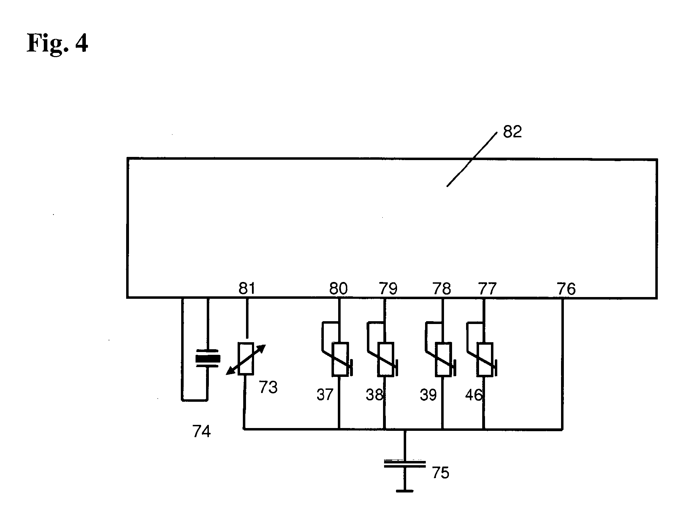

Fig. 4 stellt das Prinzip der Analog-Digital-Wandlung für das Ausführungsbeispiel gemäß Fig. 2 sowohl für die Temperaturmessung als auch für die Eingabemittel dar. An Port 81 des Prozessors 82 ist die erste Seite eines temperaturabhängigen Widerstands 73 angeschlossen. Der Widerstand 73 ist räumlich in unmittelbarer Nachbarschaft des Quarzoszillators 74 angeordnet. Im Steuerprozessor ist eine Kennlinie der Frequenzänderung über der Temperatur des Quarzoszillators 74 gespeichert. Gemäß dem nachfolgend beschriebenen Verfahren wird die aktuelle Temperatur des Quarzoszillators bestimmt und die Zeitzählung der Uhr entsprechend kompensiert.

Die Drehpotentiometer 37, 38, 39, 46 sind jeweils an einer Seite mit den Prozessorports 80, 79, 78, 77 verbunden. Der jeweils zweite Anschluss der Drehpotentiometer und des temperaturabhängigen Widerstands sind mit dem Integrationskondensator 75 und mit einem Prozessorport 76 verbunden.
Über den Port 76 wird zunächst der Kondensator 75 entladen. Danach wird über Port 77 ein Spannungspegel an das Drehpotentiometer 46 gelegt. Über den Widerstand des Drehpotentiometers 46 wird der Kondensator 75 aufgeladen. Die benötigte Zeit bis zum Erreichen eines Referenzwertes der Spannung an Port 76 wird durch Auszählen der Taktfrequenz des Oszillators 74 gemessen, und gemäß der Rastellungen 47, 48, 49, 50, 51, 52 einem definierten Schaltprofil 67, 68, 69, 70, 71, 72 zugeordnet.

In der folgenden Sequenz wird zunächst über Port 76 der Kondensator 75 entladen. Danach wird über Port 78 ein Spannungspegel an das Drehpotentiometer 39 gelegt. Über den Widerstand des Drehpotentiometers 39 wird der Kondensator aufgeladen. Die Zeit des Spannungsanstiegs wird wiederum gemessen und in Abhängigkeit der Raststellungen 40, 41, 42, 43, 44, 45 des Drehpotentiometers 39 wird dem Prozessor 82 mitgeteilt, ob nachfolgend über die Drehpotentiometer 37 und 38 Eingabedaten zu erwarten sind, die Längengrad und Breitengrad verkörpern, oder ob eine bestimmte Betriebsart ausgeführt werden soll.

### Bezugszeichen

- 1: Verteilereinbaugehäuse
- 2.1,2.2: Anschlussklemmen
- 3.1,3.2: Anschlussklemmen
- 4: Phasenleiter L
- 5: Nulleiter N
- 6: Schaltmittel
- 7: Last
- 8: Seitenfläche des Gehäuses
- 9: Gruppe der Eingabemittel für den Längengrad
- 10: Drehpotentiometer 1er Stelle der Längengrade
- 11: Drehpotentiometer 10er Stelle der Längengrade
- 12: Drehpotentiometer 100er Stelle der Längengrade
- 13: Schalter Längengrad West-Ost
- 14: Schaltposition West W
- 15: Schaltposition Ost O
- 16: Gruppe der Eingabemittel für den Breitengrad
- 17: Drehpotentiometer 1er Stelle des Breitengrades
- 18: Drehpotentiometer 10er Stelle des Breitengrades
- 19: Schalter Längengrad Nord-Süd
- 20: Schaltposition Nord N
- 21: Schaltposition Süd S
- 22: Frontfläche des Gehäuses 1
- 23: Eingabemittel für Betriebsarten
- 24: Dauer Aus OFF
- 25: Dauer Ein ON
- 26: Automatikbetrieb AUTO
- 27: Eingabemittel für Schaltprofile
- 28 - 33: Raststellungen für Schaltprofile
- 34: Anzeige
- 35: reduzierte Schaltvorrichtung
- 36: Frontfläche zu 35
- 37: Eingabemittel für den Längengrad und Breitengrad 10er Stelle
- 38: Eingabemittel für den Längengrad und Breitengrad 1er Stelle
- 39: Eingabemittel für Betriebsarten und Eingabesequenzen
- 40 - 45: Raststellungen für Betriebsarten und Eingabesequenzen
- 46: Eingabemittel für Schaltprofile
- 47 - 52: Raststellungen für Schaltprofile
- 53: Anzeige
- 54: Tageslauf der Sonne
- 55: Horizontlinie
- 56 - 64: Positionen der Sonne und Bezugslinien des Schaltprofils
- 65: Bezugslinie des Schaltprofils für die festgelegte Schaltzeit SZ2
- 66: Bezugslinie des Schaltprofils für die festgelegte Schaltzeit SZ1
- 67 - 72: Schaltprofile
- 73: Temperaturabhängiger Widerstand
- 74: Quarzoszillator
- 75: Integrationskondensator
- 76 - 81: Ports des Steuerprozessors 82
- 82: Steuerprozessor

- DA: Dämmerungsanfang der zivilen Dämmerung vor Sonnenaufgang
- DE: Dämmerungsende der zivilen Dämmerung nach Sonnenuntergang
- MOZ: Mittlere Ortszeit
- SA: Sonnenaufgang
- SU: Sonnenuntergang
- SZ1, SZ2: festgelegte Schaltzeitpunkte der mittleren Ortszeit
- UTC: Coordinated Universal Time

## Patentansprüche

1. Schaltvorrichtung zum Schalten einer elektrischen Last (7), insbesondere Leuchtmitteln, in Abhängigkeit von täglich berechneten Zeitpunkten bestimmter Sonnenpositionen (57, 58, 59, 60), die einen Steuerprozessor (82) mit einen Speicher, einen durch einen Zeittakt weiter gezählten internen Uhrzeit- und Datumszähler, sowie Eingabemittel für einen bestimmten Kreuzungspunkt von Längengrad und Breitengrad des Koordinaten-Gitter-Netzes der Erde (9, 13, 16, 19), Eingabemittel für die Auswahl einer Betriebsart (23), Eingabemittel für die Auswahl eines von mehreren Schaltprofilen (27) und Schaltmittel (6) umfasst,
**dadurch gekennzeichnet, dass**
der interne, bei der Herstellung voreingestellte Uhrzeit- und Datumszähler batteriegepuffert die koordinierte Weltzeit (UTC) und das Datum mittels Zeittakt fortlaufend inkrementiert.

2. Schaltvorrichtung nach Anspruch 1, **dadurch gekennzeichnet, dass** der Zeittakt von einem Quarzoszillator (74) abgeleitet ist und der Steuerprozessor (82) die unmittelbare Umgebungstemperatur des Quarzoszillators (74) mittels eines Temperatursensors (73) periodisch ermittelt, und die temperaturabhängige Frequenzänderung des Quarzoszillators (74) auf Basis einer vorgegebenen Temperaturkennlinie und der ermittelten Temperatur kompensiert.

3. Schaltvorrichtung nach Anspruch 1, **dadurch gekennzeichnet, dass** die Eingabemittel (9, 16) für den Kreuzungspunkt der Koordinaten Potentiometer mit mehreren Raststellungen sind.

4. Schaltvorrichtung nach Anspruch 1, **dadurch gekennzeichnet, dass** die Auswahl des Schaltprofils über ein Potentiometer (27) mit mehreren Raststellungen erfolgt.

5. Schaltvorrichtung nach Anspruch 2, **dadurch gekennzeichnet, dass** der Temperatursensor (73) ein temperaturabhängiger Widerstand ist.

6. Schaltvorrichtung nach Anspruch 1, **dadurch gekennzeichnet, dass** sie ein Gehäuse (1) mit einer einzigen Teilungsbreite für den Einbau in einen Verteiler besitzt.

7. Schaltvorrichtung nach Anspruch 6, **dadurch gekennzeichnet, dass** die Eingabemittel (9, 16) für die Koordinaten auf einer Seitenfläche (8) des Gehäuses (1) angeordnet sind.

8. Schaltvorrichtung nach einem der Ansprüche 5 bis 7, **dadurch gekennzeichnet, dass** durch den Steuerprozessor (82) jeweils über eines der Potentiometer (37, 38, 39, 46) oder über den temperaturabhängigen Widerstand ein Integrationskondensator (75) aufgeladen und entladen wird und dessen Zeiten zum Laden und Entladen durch den Steuerprozessor messbar sind und damit die Raststellungen und die Temperatur bestimmbar sind.

9. Verfahren zum Schalten einer elektrischen Last (7), insbesondere Leuchtmitteln, in Abhängigkeit von täglich berechneten Zeitpunkten bestimmter Sonnenpositionen (57, 58, 59, 60), nämlich Winkeln unterhalb des Horizontes, mit einer Schaltvorrichtung nach einem der vorstehenden Ansprüche, **dadurch gekennzeichnet, dass**
- der interne Uhrzeitzähler und Datumszähler einmalig bei Herstellung der Schaltvorrichtung mit der aktuellen koordinierten Weltzeit (UTC) und dem zugehörigen aktuellen Datum synchronisiert werden,
- der Steuerprozessor (82) danach die koordinierte Weltzeit (UTC) und das Datum fortlaufend auf Basis des angelegten Zeittakts inkrementiert,
- mittels eines astronomischen Algorithmus auf Basis des durch die Eingabemittel (9, 16) frei bestimmten Kreuzungspunktes von Längengrad und Breitengrad die Mittlere Ortszeit (MOZ) bestimmter Sonnenpositionen laufend berechnet wird ,
- und in Abhängigkeit von den berechneten Zeitpunkten bestimmter Sonnenpositionen (61, 62, 63, 64) die Einschaltung oder Ausschaltung der elektrischen Last (7) durch die Schaltmittel (6) erfolgt.

10. Verfahren nach Anspruch 9, **dadurch gekennzeichnet, dass**
bei der Inbetriebnahme der Schaltvorrichtung am Einsatzort lediglich die geographischen Koordinaten in Form von Längengrad und Breitengrad einzugeben und gegebenenfalls ist ein spezifisches Schaltprofil auszuwählen sind.

11. Verfahren nach Anspruch 9, **dadurch gekennzeichnet, dass** zusätzliche Ein- oder Ausschaltvorgänge (SZ1, SZ2) zu festgelegten Zeitpunkten erfolgen.

12. Verfahren nach Anspruch 9 oder 11, **dadurch gekennzeichnet, dass** mittels eines wählbaren Schaltprofils (28, 29, 30, 31, 32, 33) unterschiedliche Schaltzeitpunkte in Relation zu den Sonnenpositionen bestimmt werden.

## Claims

1. Switching device for switching an electrical load (7), lighting means in particular, in response to time points of defined positions of the sun (57, 58, 59, 60) that are calculated daily, comprising a control processor (82) with a memory, an internal time and date counter incremented by a clock pulse, and input means for entry of an intersection point of latitude and longitude of the coordinate grid of earth (9, 13, 16, 19), input means for selecting an operating mode (23), input means for selecting one of a plurality of switching profiles (27), and switching means (6),
**characterized in that**
the internal time and date counter, which is preset at production and battery-buffered, continuously increments the Coordinated Universal Time (UTC) and the date by means of the clock pulse.

2. Switching device according to claim 1, **characterized in that** the clock pulse is derived from a quartz oscillator (74), and that the control processor (82) periodically detects the direct ambient temperature of the crystal oscillator (74) by means of a temperature sensor (73), and compensates the temperature-dependent change in frequency of the crystal oscillator (74) on the basis of a predetermined temperature characteristic and the detected temperature.

3. Switching device according to claim 1, **characterized in that** the input means (9, 16) for the intersection point of the coordinates are potentiometers with multiple detent positions.

4. Switching device according to claim 1, **characterized in that** the switching profile is selected via a potentiometer (27) with multiple detent positions.

5. Switching device according to claim 2, **characterized in that** the temperature sensor (73) is a temperature-dependent resistor.

6. Switching device according to claim 1, **characterized in that** it has a housing (1) with a single pitch width for installation in a distributor box.

7. Switching device according to claim 6, **characterized in that** the input means (9, 16) for the coordinates are arranged at a lateral surface (8) of the housing (1).

8. Switching device according to one of the claims 5 to 7, **characterized in that** an integration capacitor (75) is charged and discharged by the control processor (82) in each case via one of the potentiometers (37, 38, 39, 46) or via the temperature-dependent resistor and that its times for charging and discharging can be measured by the control processor and thus the detent positions and the temperature can be determined.

9. A method for switching an electrical load (7), lighting means in particular, in response to time points of defined positions of the sun (57, 58, 59, 60) that are calculated daily, namely, angles below the horizon, with a switching device according to any one of the preceding claims, **characterized in that**
- the internal time counter and date counter are synchronized once, at production of the switching device, with the current Coordinated Universal Time (UTC) and the associated current date,
- subsequently, the control processor (82) increments the Coordinated Universal Time (UTC) and date continuously, based on the applied time pulse,
- the Local Mean Time (MOZ) of defined positions of the sun is continuously calculated by means of an astronomical algorithm on the basis of the specific intersection point of longitude and latitude deliberately defined via the input means (9, 16),
- and the electrical load (7) is switched on or off by the switching means (6), depending on the calculated times of defined positions of the sun (61 , 62, 63, 64).

10. The method according to claim 9, **characterized in that**,
when commissioning the switching device at the site, only the geographic coordinates in the form of longitude and latitude have to be entered and, where appropriate, a specific switching profile has to be selected.

11. The method according to claim 9, **characterized in that** additional switching-on or switching-off operations (SZ1, SZ2) take place at specified times.

12. The method according to claim 9 or 11, **characterized in that** different switching times in relation to the positions of the sun are determined by means of a selectable switching profile (28, 29, 30, 31 , 32, 33).

## Revendications

1. Dispositif de minuterie pour commuter une charge électrique (7), des agents lumineux en particulier, en réponse à des instants de positions définies du soleil (57, 58, 59, 60) qui sont calculés journellement, comprenant un processeur de commande (82) avec un mémoire, un compteur de temps et de date interne, qui est incrémenté par un rythme d'horloge, et des moyens d'entrée pour spécifier un point d'intersection de latitude et longitude du système de coordonnées de la terre (9, 13, 16, 19), des moyens d'entrée pour sélectionner un mode de fonctionnement (23), des moyens d'entrée pour sélectionner l'un d'une pluralité de profils de commutation (27), et des moyens de commutation (6),
**caractérisé en ce que**
le compteur de temps et de date interne, qui est préréglé au moment de la production, est et amorti par batterie et incrémente en continu le temps universel coordonné (UTC) et la date, au moyen du rythme d'horloge.

2. Dispositif de minuterie selon la revendication 1, **caractérisé en ce que** le rythme d'horloge est dérivé d'un oscillateur à quartz (74), et que le processeur de commande (82) détecte périodiquement la température ambiante à proximité de l'oscillateur à quartz (74) au moyen d' un capteur de température (73), et compense la variation de la fréquence de l'oscillateur à quartz (74), dépendante de la température, en fonction d'une caractéristique de température prédéterminée et de la température détectée.

3. Dispositif de minuterie selon la revendication 1, **caractérisé en ce que** les moyens d'entrée (9, 16) pour le point d'intersection de coordonnées sont des potentiomètres ayant plusieurs positions de détente.

4. Dispositif de minuterie selon la revendication 1, **caractérisé en ce que** le profil de minuterie est sélectionné par l'intermédiaire d'un potentiomètre (27) ayant plusieurs positions de détente.

5. Dispositif de minuterie selon la revendication 2, **caractérisé en ce que** le capteur de température (73) est une résistance dépendante de la température.

6. Dispositif de minuterie selon la revendication 1, **caractérisé en ce qu'**il comporte un boîtier (1) avec une seule largeur de pas pour une installation dans un tableau de distribution.

7. Dispositif de minuterie selon la revendication 6, **caractérisé en ce que** les moyens d'entrée (9, 16) pour les coordonnées sont disposés sur une surface latérale (8) du boîtier (1).

8. Dispositif de minuterie selon l'une quelconque des revendications 5 à 7, **caractérisé en ce qu'**un condensateur d'intégration (75) est chargé et déchargé par le processeur de commande (82), dans chaque cas par l'intermédiaire de l'un des potentiomètres (37 , 38, 39, 46) ou par l'intermédiaire de la résistance dépendante de la température, et que ses temps de charge et de décharge peuvent être mesurés par le processeur de commande, et donc les positions de détente et la température peuvent être déterminées.

9. Procédé pour commuter une charge électrique (7), des agents lumineux en particulier, en réponse à des instants de positions définies du soleil (57, 58, 59, 60), à savoir des angles dessous de l'horizon, qui sont calculés journellement, avec un dispositif de minuterie selon l'une quelconque des revendications précédentes, **caractérisé en ce que**
- le compteur de temps et le compteur de date internes sont synchronisés une fois, au moment de la production du dispositif de minuterie, avec le temps universel coordonné (UTC) actuel et la date actuelle associée,
- par la suite, le processeur de commande (82) incrémente en continu le temps universel coordonné (UTC) et la date, au moyen du rythme d'horloge appliqué,
- le temps moyen local (MOZ) des positions définies du soleil est calculé en continu au moyen d'un algorithme astronomique sur la base d'un point d'intersection de longitude et de latitude spécifié librement par l'intermédiaire des moyens d'entrée (9 ,16),
- et la charge électrique (7) est mise sous ou hors tension par les moyens de commutation (6), en fonction des instants calculées des positions définis du soleil (61, 62, 63, 64).

10. Procédé selon la revendication 9, **caractérisé en ce que**,
lors de la mise en service sur le site du dispositif de minuterie, seules les coordonnées géographiques en tant que longitude et latitude doivent être saisies et, le cas échéant, un profil de commutation spécifique doit être sélectionné.

11. Procédé selon la revendication 9, **caractérisé en ce que** des opérations de commutation sous ou hors tension supplémentaires (SZ1, SZ2) ont lieu à des instants précisés.

12. Procédé selon la revendication 9 ou 11, **caractérisé en ce que** des différents instants de commutation, en relation aux positions du soleil, sont définis au moyen d'un profil de commutation (28 , 29, 30, 31, 32, 33), qui peut être sélectionné.
